# EUROPÄISCHE PATENTSCHRIFT

(11) **EP 0 608 510 B1**
(45) Veröffentlichungstag und Bekanntmachung des Hinweises auf die Patenterteilung: **21.01.1998**
(21) Anmeldenummer: 93119167.0
(22) Anmeldetag: 29.11.1993
(51) Int. Cl.: C08J 3/20, C08L 87/00

(54) **Verfahren zur Einarbeitung von Stabilisatoren in Polykondensate**
Process for compounding stabilizers into polycondensates
Procédé pour mélanger des stabilisants dans des polycondensats

(30) Priorität: 23.01.1993 DE 4301808
(43) Veröffentlichungstag der Anmeldung: 03.08.1994
(73) Patentinhaber: HÜLS AKTIENGESELLSCHAFT, 45764 Marl (DE)
(72) Erfinder: Mumcu, Salih, Dr., D-45772 Marl (DE); Daebel, Hasso, Dr., D-45770 Marl (DE)

(56) Entgegenhaltungen:
- DE-A- 2 260 213
- DE-A- 2 630 087
- GB-A- 932 516
- GB-A- 1 101 325
- GB-A- 1 480 125
- US-A- 2 906 732
- US-A- 4 399 265

## Beschreibung

Gegenstand der Erfindung ist ein Verfahren zur homogenen Einarbeitung von Stabilisatoren in feinteilige, feste Polykondensate.

Polykondensate werden in großem Umfang für viele Verwendungszwecke eingesetzt. Bei der Verarbeitung und Verwendung sind sie der Einwirkung von Luft und Licht ausgesetzt. Dabei verfärben sie sich unter gleichzeitiger Verschlechterung ihrer mechanischen Eigenschaften. Dieser Effekt tritt umso stärker in Erscheinung, je höher die Temperatur liegt. Um die angeführten Mängel zu vermeiden, müssen die Polykondensate stabilisiert werden.

Das üblichste Stabilisatoreinarbeitungsverfahren geht von einem Polymergranulat-Stabilisator-Gemisch aus. Es wird in einem Kneter oder Extruder aufgeschmolzen und homogenisiert. Dann drückt man die Schmelze durch eine Lochplatte, kühlt die Stränge im Wasser ab und granuliert sie. Das Verfahren ist jedoch kostspielig, da es spezielle Kneter und Extruder mit entsprechenden Dosiereinrichtungen benötigt und vom Monomer bis zum stabilisierten Polymer im allgemeinen zwei Granulier- und zwei Trocknungsschritte erfordert.

Es ist auch bekannt, Stabilisatoren im Reaktor den Monomeren zuzusetzen und die Polykondensation in ihrer Gegenwart durchzuführen. Nachteilig ist dabei, daß sich die hitzeempfindlichen Stabilisatoren bei langer Verweilzeit und hoher Temperatur zersetzen. Die Stabilisatoren können z. T. auch mit dem Polymer reagieren, wobei ein Teil des Stabilisatormoleküls an die Polymerkette gebunden wird. Auch dadurch geht die Wirksamkeit der Stabilisatoren verloren.

In der DE-OS 21 53 249 ist beschrieben, daß man durch Verkürzung der Verweilzeit des Stabilisators in der Hitze verbesserte Polyamide bekommt. Stabilisatoren werden dabei nach der Polykondensation bei Temperaturen unterhalb von 270 °C in die Polyamidschmelze eingerührt. Dieses diskontinuierliche Verfahren kann jedoch im Produktionsmaßstab nicht befriedigen, da die Stabilisatoren im Temperaturbereich von 220 bis 270 °C, bei dem die Polyamidschmelzen rührfähig sind, bei einer 5- bis 8stündigen Schmelzaustragsphase Zersetzungs-, Umamidierungs- und Umesterungsreaktionen erleiden, die zu deutlichen Qualitätseinbußen bezüglich Homogenität, Farbe und Alterungsstabilität führen.

In der DE-OS 36 13 528 wird eine weitere Form von Einarbeitung in Gegenwart eines Polyalkenamers beschrieben. Flüssige Hilfs- und Zusatzstoffe werden hier bei höchstens 70 °C eingearbeitet. Das geschilderte Verfahren ist jedoch auf polyalkenamerfreie Polymere nicht anwendbar.

DE-A-22 60 213 beschreibt ein Verfahren zur Stabilisierung von Polymerisaten im Fließbett oder in einer Mischtrommel. Dabei wird ein Stabilisatorfilm auf den Körnern gebildet. Das Verfahren führt jedoch zu keiner homogenen Verteilung des Stabilisators in den Körnern.

DE-A-26 30 087 betrifft ein Verfahren zur homogenen Einarbeitung von Farbstoffen in lineare Polyester in einem Taumeltrockner. Das Verfahren versagt, wenn man Farbstoffe durch Stabilisatoren ersetzt.

Nach US 2 906 732 ist es erforderlich, daß unterhalb des Schmelzpunkts des Stabilisators gearbeitet wird. Vorzugsweise wird bei 70 bis 80 °C eingearbeitet. Dabei besteht die Gefahr, daß bei zu schnellem Aufheizen das Granulat agglomeriert.

Die Aufgabe der Erfindung war es, ein vielseitiges Einarbeitungsverfahren ohne Anwendung eines Kneters oder Extruders bereitzustellen, durch das unter schonenden Bedingungen eine homogene Verteilung der Stabilisatoren im Polymer erreicht wird.

Diese Aufgabe wurde erfindungsgemäß dadurch gelöst, daß man die Stabilisatoren und feste Polyamide, Polyetheramide, Polyetheresteramide oder Polyetherester mit einer Korngröße von 2,5 bis 6 mm zuerst homogen in einem Taumel- oder Schaufeltrockner vermischt und dann das Gemisch bei Temperaturen von mindestens 90 °C in fester Phase umwälzt.

Als Stabilisatoren kommen vor allem bei Raumtemperatur feste organische Antioxidantien und UV-Absorber in Frage. Die Antioxidantien gehören überwiegend in die Gruppe der sterisch gehinderten Phenole oder sterisch gehinderter Amine an. Unter den UV-Absorbern sind Derivate des Benzotriazols besonders geeignet.

Geeignete Antioxidantien sind beispielsweise:
- 2,6-Di-tert.-butyl-4-methylphenol
- 3-(3,5-di-tert.-butyl-4-hydroxyphenyl)-propionsäureoctadecylester
- 4,4'-Butyliden-bis-(3-methyl-6-tert.-butylphenol)
- N,N'-Hexamethylen-bis-(3,5-di-tert.-butyl-4-hydroxy-hydrozimtsäureamid)
- Pentaerythrityl-tetrakis-[3-(3,5-di-tert.-butyl-4-hydroxyphenyl)-propionat]
- 2,4-Di-n-octylthio-6-(4-hydroxy-3,5-di-tert.-butylamino)-1,3,5-triazin
- Tris-(2,4-di-tert.-butyl-phenyl)-phosphit
- β-(4-Hydroxy-3,5-di-tert.-butyl-phenyl)-propionsäuremethylester
- 2,2'-Methylen-bis-(4-methyl-6-tert.-butylphenol)
- 1,3,5-Tris-(4-tert.-butyl-3-hydroxy-2,6-dimethylbenzyl)-1,3,5-triazin-2,4,6(1H,3H,5H)trion
- 4,4'-Bis-(α,α-dimethylbenzyl)-diphenylamin
- N-(1,3-Dimethylbutyl)-N'-phenyl-p-phenylen-diamin
- 1,3,5-Trimethyl-2,4,6-tris-(3,5-di-tert.-butyl-4-hydroxybenzyl)-benzol
- IRGAFOS^{R} P-EPQ (von Ciba-Geigy)
- IRGAFOS^{R} 126 (von Ciba-Geigy)

Beispiele für geeignete UV-Absorber sind:
- 2-(2-Hydroxy-3,5-di-tert.-butylphenyl)-benzotriazol
- 2-(2-Hydroxy-3,5-di-tert.-amylphenyl)-benzotriazol
- 2-(2-Hydroxy-5-methylphenyl)-benzotriazol
- Bis-[4-(2,2,6,6-tetramethylpiperidyl)]-sebacat

Bevorzugt geeignet für das erfindungsgemäße Verfahren sind:
- Pentaerythrityl-tetrakis-[3-(3,5-di-tert.-butyl-4-hydroxyphenyl)-propionat]
- N,N'-Hexamethylen-bis-(3,5-di-tert.-butyl-4-hydroxy-hydrozimtsäureamid)
- 2-(2-Hydroxy-3,5-di-tert.-butylphenyl)-benzotriazol
- 2-(2-Hydroxy-3,5-di-tert.-amylphenyl)-benzotriazol

Im Rahmen der vorliegenden Erfindung ist eine Beschränkung der Konzentration nicht erforderlich. Es werden jedoch übliche Stabilisatorkonzentrationen eingestellt. Sie liegen - bezogen auf das Polykondensat - vorzugsweise unter 2 Gewichtsprozent, insbesondere zwischen 0,1 und 1,0 Gewichtsprozent.

Die Stabilisatoren schmelzen vorzugsweise im Bereich von 100 bis 200 °C. Sie können einzeln oder im Gemisch eingesetzt werden.

Geeignet sind Homo- und Copolyamide. Als Homopolyamide können z. B. Polyamid 6, Polyamid 66, Polyamid 69, Polyamid 612, Polyamid 1012, Polyamid 1212, Polyamid 11, Polyamid 12 sowie Polyamide aus Terephthalsäure und Trimethylhexamethylendiamin eingesetzt werden. In bevorzugter Weise eignet sich das erfindungsgemäße Verfahren für Polyamid 6, Polyamid 612, Polyamid 1012, Polyamid 11 und Polyamid 12.

Die Kennzeichnung der Polyamide (PA) entspricht internationaler Norm (H. Domininghaus, Die Kunststoffe und ihre Eigenschaften, VDI-Verlag, Seite 272, (1976).

Die genannten Homopolyamide sind im Rahmen der Erfindung nicht kritisch und jedem Fachmann wohl bekannt. Sie werden z. B. in Kunststoff-Handbuch, Band VI, C.-Hanser-Verlag (1966), DE-PS 21 52 194 und DE-OS 25 03 308 beschrieben. Sie können kristallin oder amorph sein. Sie weisen folgende Vorzugsbereiche auf:

| Typ | Viskositätszahl |
|---|---|
| PA 6 | 150 - 400 |
| PA 11 | 100 - 360 |
| PA 12 | 100 - 360 |
| PA 612 | 120 - 260 |

Die aufgeführten Polyamide werden einzeln oder im Gemisch eingesetzt.

Als Copolyamide eignen sich hauptsächlich solche, die Grundmonomere enthalten, welche zu den obengenannten Homopolyamiden führen. Als Cokomponente kommen beispielsweise Laurinlactam, 11-Aminoundecansäure, Caprolactam, Adipinsäure/Hexamethylendiamin, Dodecandisäure/Hexamethylendiamin, Dodecandisäure/Methylpentandiamin, Dodecandisäure/Decamethylendiamin und Dodecandisäure/Isophorondiamin in Betracht. Zu beachten ist aber, daß der Comonomeranteil nur so hoch gewählt ist, daß die Kristallschmelztemperatur des Copolymeren nicht unterhalb von 100 °C (gemäß DSC-Bestimmung) liegt.

Bevorzugte Copolyamide bestehen aus Laurinlactam/Caprolactam, Laurinlactam/Caprolactam/Adipinsäure + Hexamethylendiamin, Laurinlactam/Dodecandisäure + Decamethylendiamin und Laurinlactam/Caprolactam/11-Aminoundecansäure mit einem Kristallschmelzpunkt im Bereich von 100 bis 190 °C.

Derartige Copolyamide werden z. B. in den DE-OSS 39 21 164, 23 24 160, 19 39 758 und 32 48 776 beschrieben.

Die aufgeführten Copolyamide werden einzeln oder im Gemisch eingesetzt.

Bevorzugte Polyetheresteramide oder Polyetheramide sind aus PA-12- und Polyoxytetramethylen-Blöcken aufgebaut. Sie sind aus den Schriften DE-OS 27 12 987 (= US-PS 4 207 410), DE-OS 25 23 991, EP-PS 0 471 960 und DE-OS 34 28 404 bekannt.

Sie weisen im allgemeinen Viskositätszahlen von 140 bis 360 auf.

Unter den Polyetherestern sind insbesondere Blockcopolyester für das erfindungsgemäße Verfahren verwendbar. Derartige Produkte werden z. B. in Chimia 28 (9), Seiten 544 bis 55, (1974), und in Rubber Chemistry and Technology 50, Seiten 688 bis 703, (1977), beschrieben. Diese Blockcopolyester enthalten neben aromatischen Dicarbonsäuren und aliphatischen oder cycloaliphatischen Diolen ein Poly(oxyalkylen)diol mit einer Molmasse im Bereich von 600 bis 2 500. Bevorzugte Poly(oxyalkylen)diole sind Poly(oxyethylen)diol, Poly(oxypropylen)diol und Poly(oxytetramethylen)diol. Insbesondere sind Blockcopolyester mit Poly(oxytetramethylen)diol-Anteilen zwischen 4 bis 60 Gewichtsprozent (bezogen auf den Copolyester) für das erfindungsgemäße Verfahren geeignet.

Die geeigneten Polyetherester weisen meistens eine Viskositätszahl im Bereich von 140 bis 360 auf.

Die aufgeführten Polyetherester werden einzeln oder im Gemisch eingesetzt.

Die Einarbeitung der Stabilisatoren durch Umwälzen erfolgt vorzugsweise bei Temperaturen bis hin zu 10 °C unterhalb des Polymerschmelzpunkts (nach DSC), wenn ein kristallines Polymer vorliegt. Bei amorphen Polymeren liegt die Temperaturobergrenze vorzugsweise bei 10 °C unterhalb der Glastemperatur. Ganz besonders wird ein Temperaturbereich von 90 bis 180 °C eingestellt.

Zur Einarbeitung der Stabilisatoren wird das Polymer als Granulat mit einer Korngröße von 2,5 bis 6 mm in einen Behälter eingebracht. Als gut geeignete Behälter haben sich Taumeltrockner und Schaufeltrockner erwiesen. Bei der praktischen Durchführung des Verfahrens werden zuerst Granulat und Stabilisator homogen vermischt. Dann wird das Gemisch auf die vorgenannten erfindungsgemäßen Temperaturen erwärmt und so lange umgewälzt bis der Stabilisator in das Korn eindiffundiert ist. Die Einarbeitungszeit liegt in der Regel zwischen 30 Minuten und 8 Stunden. Bevorzugt wird unter Inertgasatmosphäre (z. B. N₂) gearbeitet.

Grundsätzlich bestehen kein Bedenken, den Stabilisator mit einem bereits erwärmten Granulat zu vermischen. Es ist auch möglich, die Einarbeitung nicht gesondert vorzunehmen, sondern während einer sonst auch notwendigen Nachbehandlung des Polymeren (z. B. Trocknung, Festphasennachkondensation o. ä.) durchzuführen. Die Manteltemperatur des Trockners sollte - zur Vermeidung von Anbackungen - maximal 10 °C unterhalb der Schmelztemperatur des Polymeren gewählt werden. Im allgemeinen liegt der Stabilisator bei Raumtemperatur in Pulverform vor und ist bei der Einarbeitungstemperatur flüssig. Bei Einsatz bestimmter Polymere, wie Polyetheresteramiden, Polyetheramiden und Polyetherestern, kann die Einarbeitung bei Temperaturen stattfinden, bei denen der Stabilisator noch nicht schmilzt.

Für das erfindungsgemäße Einarbeitungsverfahren werden keine Kneter oder Extruder benötigt. Das Verfahren erlaubt eine wirtschaftliche und schonende Einarbeitung, die zu einer homogenen Verteilung des Stabilisators im Polymer führt. Farbe und Alterungsstabilität der Polykondensate sind verbessert.

Nachfolgend werden erfindungsgemäße Beispiele durch Zahlen und nicht erfindungsgemäße Beispiele durch Buchstaben gekennzeichnet.

Bestimmungsmethoden:
Viskositätszahl gemäß DIN 53 727
Schmelzpunktbestimmung mit DSC gemäß ASTM D 3418-82
- NH₂-Endgruppenbestimmung:: Polyamid wird in m-Kresol gelöst und mit HClO₄-Lösung titriert
- COOH-Endgruppenbestimmung:: Polyamid wird in Benzylalkohol gelöst und mit KOH-Lösung titiert
Wassergehaltbestimmung gemäß ASTM D 4019
Shore-Härte-Bestimmung gemäß DIN 53 505 HPLC-Analyse mit einem Gerät von Fa. Hewlett Packard (TYP 1090 L) mit ternärem Pumpensystem PV 5, Filterphotometerdetektor (Wellenlänge 269 nm), Säule: Li-Chrospher 100 RP-8 (5 µm).

### Beispiel 1

7 t PA-612-Granulat (Viskositätszahl: 120; Endgruppenkonzentration: 140 mÄq.-COOH/kg und 8 mÄq.-NH₂/kg; Tₘ nach DSC: 216 °C) und 35 kg N,N'-Hexamethylen-bis-(3,5-di-tert.-butyl-4-hydroxy-hydrozimtsäureamid) (Stab. 1) mit einem Schmelzbereich von 156 bis 161 °C werden in einem 20-m³-Taumeltrockner mit der Drehzahl 10 Upm innerhalb von 2 Stunden homogenisiert. Anschließend wird die Luft durch Stickstoff verdrängt. Der Trockner wird dann unter Einleiten von Stickstoff (20 m³/h) auf 180 °C aufgeheizt. Wenn die Granulattemperatur 170 °C erreicht, ist bereits die gesamte Stabilisatormenge vom Granulat aufgenommen. Schließlich wird der Trocknerinhalt abgekühlt. Man erhält ein farbloses Granulat mit der Viskositätszahl 122. Die HPLC-Analyse ergibt einen Gehalt von 0,5 Gewichtsprozent Stab. 1, der dem theoretischen Wert entspricht.

### Beispiel A

### (Gemäß DE-OS 21 53 249, zum Vergleich mit dem Beispiel 1)

In einem 20-l-Kessel mit Wendelrührer werden, ausgehend von Hexamethylendiamin und Dodecandisäure, 7 kg farblose Polyamid-612-Schmelze mit folgenden Analysenwerten hergestellt:

| | |
|---|---|
| Viskositätszahl | 116 |
| (-COOH) | 148 mÄq./kg |
| (-NH₂) | 5 mÄq./kg |
| Wassergehalt | 0,20 Gew.-% |

Zu dieser PA-612-Schmelze, die auf 250 °C abgekühlt wird, werden unter N₂-Abdeckung 35 g Stab. 1 innerhalb von einer Stunde bei 40 Upm eingerührt. Danach wird die Schmelze ausgetragen und granuliert, wobei zur Simulation eines Produktionsansatzes jede Stunde nur ca. 1 kg Schmelze ausgetragen wird. An erhaltenen Granulatproben werden die in der Tabelle 1 genannten Analysenwerte ermittelt:

**Tabelle 1**

| Zeit (h) | Viskositätszahl | Farbe | Stab.-1-Gehaltlaut HPLC-Analyse (Gew.-%)* | Zersetzter Stab.-1-Anteil (Gew.-%)** |
|---|---|---|---|---|
| Anfang 0 | 114 | leichter Gelbstich | 0,42 | 16 |
| 1 | 114 | leichter Gelbstich | 0,40 | 20 |
| 2 | 112 | leichter Gelbstich | 0,38 | 24 |
| 3 | 112 | leichter Gelbstich | 0,35 | 30 |
| 4 | 110 | leichter Gelbstich | 0,32 | 36 |
| 5 | 108 | leichter Gelbstich | 0,29 | 42 |
| 6 | 104 | leichter Gelbstich | 0,26 | 48 |

| | | | | |
|---|---|---|---|---|
| * Konzentration im Granulat | | | | |
| ** Bezogen auf die Ausgangsmenge des Stabilisators | | | | |

Aus der Tabelle geht hervor, daß der Stabilisator sich im Reaktor zersetzt und mit dem Polymer reagiert. Es wird ein farblich nicht einwandfreies inhomogenes Polykondensat erhalten, bei dem nicht jedes Granulatkorn denselben Stabilisatorgehalt aufweist.

### Beispiel 2

7 t PA-12-Granulat (Viskositätszahl: 176; Endgruppenkonzentration: 56 mÄq. COOH/kg und 9 mÄq. NH₂/kg; Tₘ nach DSC: 179 °C; Wassergehalt: 0,25 Gew.-%), 35 kg Stab. 1 mit einem Schmelzbereich von 156 bis 161 °C und 35 kg 2-(2-Hydroxy-3,5-di-tert.-butylphenyl)-benzotriazol (Stab. 2) mit einem Schmelzpunkt von 154 °C werden in einem 20-m³-Taumeltrockner mit der Drehzahl 10 Upm innerhalb von 2 Stunden homogenisiert. Nach dem Luftausschluß wird unter Einleiten von Stickstoff (20 m³/h) bei einer Manteltemperatur von 170 °C aufgeheizt. Wenn die Granulattemperatur 163 °C erreicht, ist die gesamte Stabilisatormenge vom Granulat aufgenommen. Schließlich wird der Trocknerinhalt abgekühlt. Man erhält ein farbloses Granulat mit der Viskositätszahl 180 und einem Wassergehalt von 0,03 Gewichtsprozent. Die HPLC-Analyse ergibt Stabilisatorgehalte, die den theoretischen Werten entsprechen: jeweils 0,5 Gewichtsprozent Stab. 1 und Stab. 2.

### Beispiel 3

7 t Polyetheresteramid-Granulat (Shore-D-Härte: 40; Viskositätszahl: 200; Tₘ nach DSC: 150 °C; Wassergehalt: 0,8 Gew.-%) aus 40 Gewichtsteilen Laurinlactam, 11 Gewichtsteilen Dodecandisäure und 49 Gewichtsteilen Polyoxytetramethylendiol (Mₙ= 1 000) und 70 kg Stab. 2 mit einem Schmelzpunkt von 154 °C werden in einem 20-m 20-m³-Taumeltrockner mit der Drehzahl 10 Upm innerhalb von 2 Stunden homogenisiert. Anschließend wird der Sauerstoff durch Stickstoff verdrängt. Der Trockner wird dann unter Einleiten von N₂ (20 m³/h) bei einer Manteltemperatur von 130 °C aufgeheizt. Wenn die Granulattemperatur 110 °C erreicht, ist die gesamte Stabilisatormenge vom Granulat aufgenommen. Nach weiteren 2 Stunden wird der gewünschte Wassergehalt (< 0,05 Gew.-%) erreicht. Danach wird der Trocknerinhalt abgekühlt. Man erhält ein in der Farbe dem Ausgangsgranulat entsprechendes Produkt. Die HPLC-Analyse ergibt einen Gehalt von 1,0 Gewichtsprozent Stab. 2, welcher dem theoretischen Wert entspricht.

### Beispiel 4

7 t Polyetheresteramid-Granulat (Shore-D-Härte: 47; Viskositätszahl: 210; T ₘ nach DSC: 159 °C; Wassergehalt: 1,0 Gew.-%) aus 50 Gewichtsteilen Laurinlactam, 9 Gewichtsteilen Dodecandisäure und 41 Gewichtsteilen Polyoxytetramethylendiol (Mₙ= 1 000), 35 kg Pentaerythrityltetrakis-[3-(3,5-di-tert.-butyl-4-hydroxyphenyl)-propionat] (Stab. 3) mit einem Schmelzbereich von 110 bis 125 °C und 35 kg Stab. 2 mit einem Schmelzpunkt von 154 °C werden in einem 20-m³-Taumeltrockner mit der Drehzahl 10 Upm innerhalb von 2 Stunden homogenisiert. Anschließend wird der Sauerstoff durch Stickstoff verdrängt. Der Trockner wird dann unter Einleiten von N₂ (20 m³/h) bei einer Manteltemperatur von 130 °C aufgeheizt. Wenn die Granulattemperatur 120 °C erreicht, erhält man Granulat ohne pulverige Stabilisatoranteile (Wassergehalt: 0,045 Gew.-% und Viskositätszahl: 208). Nach Abkühlung des Trocknerinhalts erhält man ein in der Farbe dem Ausgangsgranulat entsprechendes Produkt. Die HPLC-Analyse ergibt Stabilisatorgehalte, die den theoretischen Werten entsprechen: jeweils 0,5 Gewichtsprozent Stab. 3 und Stab. 2.

### Beispiel B

### (Gemäß DE-OS 21 53 249, zum Vergleich mit dem Beispiel 4)

In einem 20-l-Kessel mit Wendelrührer werden, ausgehend von 50 Gewichtsteilen Laurinlactam, 9 Gewichtsteilen Dodecandisäure und 41 Gewichtsteilen Polyoxytetramethylendiol (Mₙ= 1000), 7 kg leicht gelbliche Polyetheresteramid-Schmelze mit folgenden Analysenwerten hergestellt:

| | |
|---|---|
| Viskositätszahl | 114 |
| Shore-D-Härte | 47 |
| Wassergehalt | 0,01 Gew.-% |

Zu dieser Schmelze, die auf 250 °C abgekühlt wird, werden unter N₂-Abdeckung 35 g Stab. 3 und 35 g Stab. 2 bei 40 Upm innerhalb von einer Stunde eingerührt. Danach wird die Schmelze ausgetragen und granuliert, wobei zur Simulation eines Produktionsansatzes jede Stunde nur ca. 1 kg Schmelze ausgetragen wird. An erhaltenen Granulatproben werden die in der Tabelle 2 genannten Analysenwerte ermittelt:

**Tabelle 2**

| Zeit (h) | Viskositätszahl | Farbe | Stab.-3/Stab.-2- Gehaltelaut HPLC-Analyse (Gew.-%)* | Zersetzte Stab.-3/Stab.-2- Anteile (Gew.-%)** |
|---|---|---|---|---|
| Anfang 0 | 210 | gelb | 0,38/0,49 | 24/ 2 |
| 1 | 206 | gelb | 0,32/0,48 | 36/ 4 |
| 2 | 200 | gelb | 0,27/0,47 | 46/ 6 |
| 3 | 196 | gelb | 0,21/0,46 | 58/ 8 |
| 4 | 194 | gelb | 0,16/0,45 | 68/10 |
| 5 | 190 | dunkelgelb | 0,10/0,45 | 80/10 |
| 6 | 186 | dunkelgelb | 0,06/0,44 | 88/12 |

| | | | | |
|---|---|---|---|---|
| * Konzentration im Granulat | | | | |
| ** Bezogen auf die Ausgangsmenge des Stabilisators | | | | |

Aus der Tabelle geht hervor, daß die Stabilisatoren mit dem Polykondensat reagieren bzw. sich zersetzen, wobei die Viskositätszahl des Polykondensats abnimmt. Man erhält ein farblich nicht einwandfreies inhomogenes Polykondensat, bei dem nicht jedes Granulatkorn denselben Stabilisatorgehalt aufweist.

## Patentansprüche

1. Verfahren zur homogenen Einarbeitung von Stabilisatoren in Polykondensate,
dadurch gekennzeichnet,
daß man die Stabilisatoren und feste Polyamide, Polyetheramide, Polyetheresteramide oder Polyetherester mit einer Korngröße von 2,5 bis 6 mm zuerst homogen in einem Taumel- oder Schaufeltrockner vermischt und dann das Gemisch bei Temperaturen von mindestens 90 °C in fester Phase umwälzt.

2. Verfahren nach Anspruch 1,
dadurch gekennzeichnet,
daß man bei einer Temperatur bis hin zu 10 °C unterhalb des Schmelzbzw. Erweichungspunkts der Polykondensate umwälzt.

3. Verfahren nach Anspruch 1,
dadurch gekennzeichnet,
daß beim Umwälzen eine Temperatur von 90 bis 180 °C eingestellt wird.

4. Verfahren nach Anspruch 1,
dadurch gekennzeichnet,
daß Antioxidantien und UV-Absorber, die bei Raumtemperatur fest sind, eingearbeitet werden.

## Claims

1. A process for homogeneous incorporation of stabilizers into polycondensates, characterized in that the stabilizers and solid polyamides, polyether-amides, polyether-ester-amides or polyetheresters having a particle size of from 2.5 to 6 mm are first mixed homogenously in a tumble drier or paddle drier and then the mixture is circulated in the solid phase at temperatures of at least 90°C.

2. A process according to claim 1, characterized in that the mixture is circulated at a temperature at least 10°C below the melting or softening point of the polycondensates.

3. A process according to claim 1, characterized in that a temperature of 90 to 180°C is established during circulation.

4. A process according to claim 1, characterized in that antioxidants and UV absorbers which are solid at room temperature are incorporated.

## Revendications

1. Procédé d'incorporation homogène d'agents stabilisants dans des polycondensats,
caractérisé en ce qu'
on mélange les agents stabilisants et les polyamides, polyétheramides, polyétheresteramides, ou polyétheresters solides ayant une taille de grains de 2,5 à 6 mm en premier lieu à homogénéité dans un séchoir à rotation excentrique ou avec des pales et ensuite on fait tourner le mélange à des températures d'au moins 90°C dans la phase solide.

2. Procédé selon la revendication 1,
caractérisé en ce qu'
on fait tourner à une température allant jusqu'à 10°C en dessous le point de fusion ou le point de ramollissement des polycondensats.

3. Procédé selon la revendication 1,
caractérisé en ce qu'
on ajoute au cours de la mise en rotation une température allant de 90 à 180°C.

4. Procédé selon la revendication 1,
caractérisé en ce que
les agents antioxydants et les absorbants des U.V. qui sont solides à température ambiante, sont incorporés.
